# EUROPEAN PATENT SPECIFICATION

(11) **EP 4 428 640 B1**
(45) Date of publication and mention of the grant of the patent: **04.03.2026**
(21) Application number: 22885422.0
(22) Date of filing: 05.09.2022
(51) Int. Cl.: G05B 19/042, G05B 19/05

(54) **INPUT-OUTPUT CONTROL CIRCUIT, CONTROLLER, AND AIR CONDITIONER**
EINGANGS-/AUSGANGSSTEUERSCHALTUNG, STEUERUNG UND KLIMAANLAGE
CIRCUIT DE COMMANDE D'ENTRÉE-SORTIE, DISPOSITIF DE COMMANDE ET CLIMATISEUR

(30) Priority: 01.11.2021 CN 202111284434
(43) Date of publication of application: 11.09.2024
(73) Proprietor: Shanghai Kong Intelligent Building Co., Ltd, Shanghai 200080 (CN); GD Midea Heating & Ventilating Equipment Co., Ltd., Foshan, Guangdong 528311 (CN)
(72) Inventor: ZHAO, Zhen, Shanghai 200080 (CN); YANG, Dayou, Shanghai 200080 (CN); YAN, Jie, Shanghai 200080 (CN)
(74) Representative: Ran, Handong
(86) International application number: PCT/CN2022/117042
(87) International publication number: WO 2023/071532

(56) References cited:
- CN-A- 102 650 854
- CN-A- 106 921 379
- CN-A- 107 942 787
- CN-A- 108 829 006
- CN-A- 111 176 152
- CN-A- 114 063 551
- CN-U- 205 720 625
- GB-A- 2 400 991
- US-B1- 6 308 231

## Description

### FIELD

The present disclosure relates to the field of electronic technology, and specifically to an input-output control circuit, a controller and an air conditioner.

### BACKGROUND

With the rapid development of industrial automation, Programmable Logic Controller (PLC) and Direct Digital Control (DDC) controller are increasingly applied in various fields such as industry, transportation, buildings. With the intelligent upgrading of the controller, there is a higher and higher demand on the function of input and output control circuits of the controller.

Therefore, it is of an urgent problem to be solved on how to improve the universality, safety, and reliability of the input and output control circuit. GB2400991A relates generally to an interface circuit for selectively and alternately configuring an input/output (I/O) terminal of an electronic circuit, as one of an input and an output terminal.

### SUMMARY

Aspects of the invention are set out in the claims. In the following, each of the described methods, apparatuses, embodiments, examples, and aspects, which do not fully correspond to the invention as defined in the claims is thus not according to the invention and is, as well as the whole following description, present for illustration purposes only or to highlight specific aspects or features of the claims. Embodiments not falling under the scope of the claims should be interpreted as examples useful for understanding the invention. The present disclosure aims to solve at least one of the technical problems in the related art to a certain degree.

For this, a first objective of the present disclosure is to provide an input-output control circuit, thus to convert the input or output signal with simple operations, thereby improving the universality, safety and reliability of the input-output control circuit.

A second objective of the present disclosure is to provide a controller.

A third objective of the present disclosure is to provide an air conditioner.

In order to achieve the above objectives, according to a first aspect of embodiments of the present disclosure, there is provided an input-output control circuit as defined in claim

According to the invention, the input-output control circuit includes: the signal input-output end, the first switch module, the first resistor, the second switch module, the second resistor, the third resistor, the third switch module, the fourth resistor, the fourth switch module, the fifth switch module, the amplification module, the sixth switch module and the controller module, as defined in claim 1.

Accordingly, the input-output control circuit could convert the input or output signal with simple operations, thereby improving the universality, safety and reliability of the input-output control circuit.

In addition, the input and output control circuit according to the first aspect of embodiments of the present disclosure may further involve the additional features as follows.

According to an embodiment of the present disclosure, the first switch module includes: a first transistor, where a first end of the first transistor is connected to the first direct-current voltage source, a second end of the first transistor is connected to the first end of the first resistor, and a third end of the first transistor is connected to the first end of the second switch module; and a fifth resistor, where a first end of the fifth resistor is connected to the first end of the first transistor, and a second end of the fifth resistor is connected to the third end of the first transistor.

According to an embodiment of the present disclosure, the second switch module includes: a second transistor, where a first end of the second transistor is connected to the third end of the first switch module, a second end of the second transistor is grounded, and a third end of the second transistor is connected to the first control end.

According to an embodiment of the present disclosure, the third switch module includes: a third transistor, where a first end of the third transistor is connected to the second end of the third resistor, a second end of the third transistor is grounded, and a third end of the third transistor is connected to the second control end; and a sixth resistor, where a first end of the sixth resistor is connected to the third end of the third transistor, and a second end of the sixth resistor is connected to the second end of the third transistor.

According to an embodiment of the present disclosure, the fourth switch module includes: a fourth transistor, where a first end of the fourth transistor is connected to the second end of the fourth resistor, a second end of the fourth transistor is grounded, and a third end of the fourth transistor is connected to the first end of the fifth switch module; and a seventh resistor, where a first end of the seventh resistor is connected to the second end of the fourth transistor, and a second end of the seventh resistor is connected to the third end of the fourth transistor.

According to an embodiment of the present disclosure, the fifth switch module includes: a fifth transistor, where a first end of the fifth transistor is connected to the third direct-current voltage source via an eighth resistor, a second end of the fifth transistor is grounded, and a third end of the fifth transistor is connected to the second control end.

According to an embodiment of the present disclosure, the amplification module includes: an operational amplifier; a ninth resistor, where a first end of the ninth resistor is connected to a non-inverting input end of the operational amplifier, and a second end of the ninth resistor is connected to the digital-analog conversion end; a tenth resistor, where a first end of the tenth resistor is connected to an inverting input end of the operational amplifier, and a second end of the tenth resistor is grounded; an eleventh resistor, where a first end of the eleventh resistor is connected to the first end of the sixth switch module, and a second end of the eleventh resistor is connected to an output end of the operational amplifier; and a twelfth resistor, where a first end of the twelfth resistor is connected to the first end of the eleventh resistor, and a second end of the twelfth resistor is connected to the inverting input end of the operational amplifier.

According to an embodiment of the present disclosure, the sixth switch module includes: a relay, where a first end of the relay is connected to the third end of the amplification module, a second end of the relay is connected to the signal input-output end, a third end of the relay is connected to the third control end via a thirteenth resistor, and a fourth end of the relay is grounded.

According to an embodiment of the present disclosure, the input-output control circuit above further includes: a filtration module, including: a first capacitor, a second capacitor and a fourteenth resistor, in which a first end of the first capacitor is connected to the second end of the second resistor and a first end of the fourteenth resistor, a second end of the first capacitor is grounded, a first end of the second capacitor is connected to the analog-digital conversion end and a second end of the fourteenth resistor, and a second end of the second capacitor is grounded.

According to an embodiment of the present disclosure, the input-output control circuit above further includes: a first voltage stabilizer, where a first end of the first voltage stabilizer is connected to the signal input-output end, and a second end of the first voltage stabilizer is grounded.

According to an embodiment of the present disclosure, the input-output control circuit above further includes: a second voltage stabilizer, where a first end of the second voltage stabilizer is connected to a second direct-current voltage source, a second end of the second voltage stabilizer is connected to the analog-digital conversion end, and a third end of the second voltage stabilizer is grounded.

In order to achieve the above objectives, according to a second aspect of embodiments of the present disclosure, there is provided a controller, including an input-output control circuit according to the first aspect of embodiments of the present disclosure.

The controller according to embodiments of the present disclosure could convert the input or output signal with simple operations, thereby improving the universality, safety and reliability of the input-output control circuit.

In order to achieve the above objectives, according to a third aspect of embodiments of the present disclosure, there is provided an air conditioner, including a controller according to the second aspect of embodiments of the present disclosure.

The air conditioner according to embodiments of the present disclosure could convert the input or output signal with simple operations, thereby improving the universality, safety and reliability of the input-output control circuit.

Additional aspects and advantages of embodiments of the present disclosure will be given in part in the following descriptions, become apparent in part from the following descriptions, or be learned from the practice of the embodiments of the present disclosure.

### BRIEF DESCRIPTION OF THE DRAWINGS

The above and/or additional aspects and advantages of embodiments of the present disclosure will become apparent and more readily appreciated from the following descriptions made with reference to the drawings, in which:
Figure 1 is a schematic diagram showing an input-output control circuit according to embodiments of the present disclosure;
Figure 2 is a circuit diagram showing an input-output control circuit according to an embodiment of the present disclosure;
Figure 3 is a block diagram showing a controller according to an embodiment of the present disclosure; and
Figure 4 is a block diagram showing an air conditioner according to an embodiment of the present disclosure.

### DETAILED DESCRIPTION

Embodiments of the present disclosure will be described in detail and examples of embodiments are illustrated in the drawings. The same or similar elements and the elements having the same or similar functions are denoted by like reference numerals throughout the descriptions. Embodiments described herein with reference to drawings are explanatory, serve to explain the present disclosure, and are not construed to limit embodiments of the present disclosure.

Reference will be made to an input-output control circuit, controller and air conditioner provided in embodiments of the present disclosure, referring to the accompanying drawings.

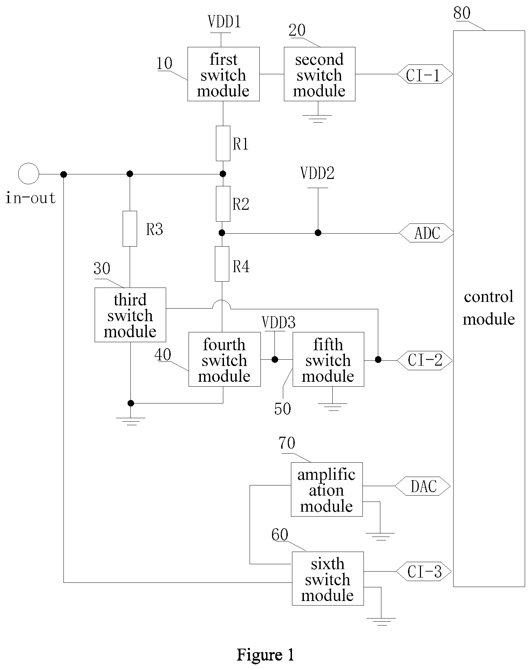

Figure 1 is a schematic diagram showing an input-output control circuit according to embodiments of the present disclosure.

It should be noted that the input-output control circuit provided in embodiments of the present disclosure is arranged in a controller.

As shown in Figure 1, according to embodiments of the present disclosure, the input-output control circuit includes: a signal input-output end (in-out), a first switch module (10), a first resistor (R1), a second switch module (20), a second resistor (R2), a third resistor (R3), a third switch module (30), a fourth resistor (R4), a fourth switch module (40), a fifth switch module (50), a sixth switch module (60), an amplification module (70) and a control module (80).

The signal input-output end (in-out) is for inputting or outputting a signal. A first end of a first switch module (10) is connected to a first direct-current voltage source, such as a 10 VDC voltage source. A first end of the first resistor (R1) is connected to a second end of the first switch module (10). A first end of a second switch module (20) is connected to a third end of the first switch module (10), a second end of the second switch module (20) is grounded, and a third end of the second switch module (20) is connected to a first control end (CI-1) of the control module (80). A first end of the second resistor (R2) is connected to the signal input-output end (in-out), and a second end of the second resistor (R2) is connected to a second direct-current voltage source such as a 3.3 VDC voltage source and an analog-digital conversion end (ADC) of the control module (80). A first end of a third resistor (R3) is connected to the signal input-output end (in-out). A first end of a third switch module (30) is connected to the signal input-output end (in-out), a second end of the third switch module (30) is grounded, and a third end of the third switch module (30) is connected to a second control end (CI-2) of the control module (80). A first end of a fourth resistor (R4) is connected to the second end of the second resistor (R2). A first end of a fourth switch module (40) is connected to a second end of the fourth resistor (R4), and a second end of the fourth switch module (40) is grounded. A first end of a fifth switch module (50) is connected to a third end of the fourth switch module (40) and a third direct-current voltage source such as a 5 VDC voltage source, a second end of the fifth switch module (50) is grounded, and a third end of the fifth switch module (50) is connected to the second control end (CI-2) of the control module (80). A first end of an amplification module (70) is connected to a digital-analog conversion end (DAC) of the control module (80), and a second end of the amplification module (70) is grounded. A first end of a sixth switch module (60) is connected to a third end of the amplification module (70), a second end of the sixth switch module (60) is connected to the signal input-output end (in-out), a third end of the sixth switch module (60) is connected to the third control end (CI-3) of the control module (80), and a fourth end of the sixth switch module (60) is grounded. The control module (80) is configured to: control the second switch module (20) to be on or off according to the first control signal output by the first control end (CI-1); control the fifth switch module (50) and the third switch module (30) to be on or off individually according to the second control signal output by the second control end (CI-2); and control the sixth switch module (60) to be on or off according to the third control signal output by the third control end (CI-3), to collect the signal input from the signal input-output end (in-out) by the analog-digital conversion end (ADC), or to output the signal input to the digital-analog conversion end (DAC) through the signal input-output end (in-out).

In specific, based on the input-output end in an input state, the signal input, for example, is a temperature signal, the input-output control circuit is in a resistance collecting mode, and an external resistance-type temperature sensor (RT) is connected to the input-output end. The control module (80) controls the second switch module (20) to be connected according to the first control signal output by the first control end (CI-1), and the second switch module (20) controls the first switch module (10) to be connected; the control module (80) controls the third switch module (30) and the fifth switch module (50) to be disconnected individually, according to the second control signal output by the second control end (CI-2), and the fifth switch module (50) controls the fourth switch module (40) to be connected; and the control module (80) controls the sixth switch module (60) to be disconnected according to the third control signal output by the third control end (CI-3). At this time, the second resistor (R2) and the fourth resistor (R4) are connected in series, and the external resistance-type temperature sensor (RT) is connected in parallel to the series second resistor (R2) and fourth resistor (R4), and is further connected in series to the first resistor (R1). The resistance collecting circuit is supplied with electricity through the first direct-current voltage source, and a voltage signal across the fourth resistor (R4) is collected. The voltage signal is output to the analog-digital conversion end (ADC), and subject to analog-digital conversion performed by the control module (80). At this time, a value of resistance of the external resistance-type temperature sensor (RT) is obtained by the control module (80) based on the collected voltage signal, thereby realizing a collection for the input resistance value.

Based on the input-output end in an input state, the signal input, for example, is a current signal, the input-output control circuit is in a current collecting mode, and a current signal of 0-20 mA is(are) connected to the input-output end. The control module (80) controls the second switch module (20) to be disconnected according to the first control signal output by the first control end (CI-1), and the second switch module (20) controls the first switch module (10) to be disconnected; the control module (80) controls the third switch module (30) and the fifth switch module (50) to be connected individually, according to the second control signal output by the second control end (CI-2), and the fifth switch module (50) controls the fourth switch module (40) to be disconnected; and the control module (80) controls the sixth switch module (60) to be disconnected according to the third control signal output by the third control end (CI-3). At this time, the current signal of 0-20 mA is(are) detected via the third resistor (R3) and is converted to a voltage signal, and the converted voltage signal, after across the second resistor (R2), is output to the analog-digital conversion end (ADC), and subject to analog-digital conversion performed by the control module (80). At this time, a current value of the current signal is obtained by the control module (80), based on the collected voltage signal, thereby realizing a collection for the input current value.

Based on the input-output end in an input state, the signal input, for example, is a voltage signal, the input-output control circuit is in a voltage collecting mode, and a voltage signal of 0-10 V is(are) connected to the input-output end. The control module (80) controls the second switch module (20) to be disconnected according to the first control signal output by the first control end (CI-1), and the second switch module (20) controls the first switch module (10) to be disconnected; the control module (80) controls the third switch module (30) and the fifth switch module (50) to be disconnected individually, according to the second control signal output by the second control end (CI-2), and the fifth switch module (50) controls the fourth switch module (40) to be connected; and the control module (80) controls the sixth switch module (60) to be disconnected according to the third control signal output by the third control end (CI-3). At this time, the voltage signal of 0-10 V is(are) divided by the second resistor (R2) and the fourth resistor (R4) and output to the analog-digital conversion end (ADC), and subject to analog-digital conversion performed by the control module (80). At this time, a voltage value of the voltage signal is obtained by the control module (80), based on the obtained voltage signal, thereby realizing a collection for the input voltage value.

Based on the input-output end in an output state, the signal output, for example, is a voltage signal, the input-output control circuit is in a voltage outputting mode, and the control module (80) inputs a voltage signal of 0-10 V to the digital-analog conversion end. The control module (80) controls the second switch module (20) to be disconnected according to the first control signal output by the first control end (CI-1), and the second switch module (20) controls the first switch module (10) to be disconnected; the control module (80) controls the third switch module (30) and the fifth switch module (50) to be disconnected individually, according to the second control signal output by the second control end (CI-2), and the fifth switch module (50) controls the fourth switch module (40) to be connected; and the control module (80) controls the sixth switch module (60) to be connected according to the third control signal output by the third control end (CI-3). At this time, the voltage signal of 0-10 V is operationally amplified by the amplification module (70), and a voltage signal of 0-10 V is(are) output to the input-output end. That is, a voltage signal of 0-10 V is(are) output from the input-output end. At this time, the voltage signal of 0-10 V is(are) divided by the second resistor (R2) and the fourth resistor (R4), and the analog-digital conversion end (ADC) collects a voltage across the fourth resistor (R4), thereby realizing a collection for the input voltage.

Based on that a dry-contact (electrical independent contact) signal is input via the input-output end, the control module (80) controls the second switch module (20) to be connected according to the first control signal output by the first control end (CI-1), and the second switch module (20) controls the first switch module (10)) to be connected; the control module (80) controls the third switch module (30) and the fifth switch module (50) to be disconnected individually, according to the second control signal output by the second control end (CI-2), and the fifth switch module (50) controls the fourth switch module (40) to be connected; and the control module (80) controls the sixth switch module (60) to be disconnected according to the third control signal output by the third control end (CI-3). At this time, based on the input-output end is disconnected, a voltage collected by the analog-digital conversion end (ADC) is about 10 V; while based on the input-output end is connected, a voltage collected by the analog-digital conversion end (ADC) is about 0 V, such that the analog-digital conversion end (ADC) could judge whether the input-output end is on or off, according to the maximum value and the minimum value of the collected voltage value, thereby realizing the monitoring of digital quantity.

Accordingly, the input-output control circuit could convert the input or output signal with simple operations, thereby improving the universality, safety and reliability of the input and output control circuit.

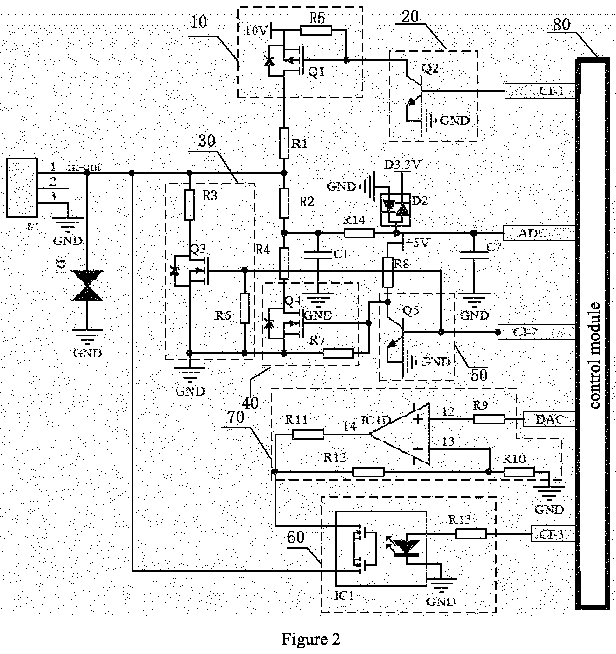

Reference will be made to the input-output control circuit provided in embodiments of the present disclosure, referring to Figure 2.

As shown in Figure 2, the first switch module (10) includes: a first transistor (Q1) and a fifth resistor (R5). A first end of the first transistor (Q1) is connected to the first direct-current voltage source, a second end of the first transistor (Q1) is connected to the first end of the first resistor (R1), and a third end of the first transistor (Q1) is connected to the first end of the second switch module (20). A first end of the fifth resistor (R5) is connected to the first end of the first transistor (Q1), and a second end of the fifth resistor (R5) is connected to the third end of the first transistor (Q1). The first transistor (Q1) may be a P-type metal-oxide semiconductor (MOS) transistor.

As shown in Figure 2, the second switch module (20) includes: a second transistor (Q2), where a first end of the second transistor (Q2) is connected to the third end of the first switch module (10), a second end of the second transistor (Q2) is grounded, and a third end of the second transistor (Q2) is connected to the first control end (CI-1). The second transistor (Q2) may be a NPP-type triode.

As shown in Figure 2, the third switch module (30) includes a third transistor (Q3) and a sixth resistor (R6). A first end of the third transistor (Q3) is connected to the second end of the third resistor (R3), a second end of the third transistor (Q3) is grounded, and a third end of the third transistor (Q3) is connected to the second control end (CI-2). A first end of the sixth resistor (R6) is connected to the third end of the third transistor (Q3), and a second end of the sixth resistor (R6) is connected to the second end of the third transistor (Q3). The third transistor (Q3) may be an N-type MOS transistor.

As shown in Figure 2, the fourth switch module (40) includes: a fourth transistor (Q4) and a seventh resistor (R7). A first end of the fourth transistor (Q4) is connected to the second end of the fourth resistor (R4), a second end of the fourth transistor (Q4) is grounded, and a third end of the fourth transistor (Q4) is connected to the first end of the fifth switch module (50). A first end of the seventh resistor (R7) is connected to the second end of the fourth transistor (Q4), and a second end of the seventh resistor (R7) is connected to the third end of the fourth transistor (Q4). The fourth transistor (Q4) may be an N-type MOS transistor.

As shown in Figure 2, the fifth switch module (50) includes: a fifth transistor (Q5), where a first end of the fifth transistor (Q5) is connected to the third direct-current voltage source via an eighth resistor, a second end of the fifth transistor (Q5) is grounded, and a third end of the fifth transistor (Q5) is connected to the second control end (CI-2). The fifth transistor (Q5) may be a NPN-type triode.

As shown in Figure 2, the amplification module (70) includes: an operational amplifier (ICID), a ninth resistor (R9), a tenth resistor (R10), an eleventh resistor (R11), and a twelfth resistor (R12). A first end of the ninth resistor (R9) is connected to a non-inverting input end of the operational amplifier (ICID), and a second end of the ninth resistor (R9) is connected to the digital-analog conversion end (DAC). A first end of the tenth resistor (R10) is connected to an inverting input end of the operational amplifier (ICID), and a second end of the tenth resistor (R10) is grounded. A first end of the eleventh resistor (R11) is connected to the first end of the sixth switch module (60), and a second end of the eleventh resistor (R11) is connected to an output end of the operational amplifier (ICID). A first end of the twelfth resistor (R12) is connected to the first end of the eleventh resistor (R11), and a second end of the twelfth resistor (R12) is connected to the inverting input end of the operational amplifier (ICID).

As shown in Figure 2, the sixth switch module (60) includes: a relay (IC1), where a first end of the relay (IC1) is connected to the third end of the amplification module (70), a second end of the relay (IC1) is connected to the signal input-output end (in-out), a third end of the relay (IC1) is connected to the third control end (CI-3) via a thirteenth resistor, and a fourth end of the relay (IC1) is grounded. The relay (IC1) may be a solid state relay (IC1), an electromagnetic relay (IC1) and the like.

As shown in Figure 2, the input-output control circuit above further includes: a filtration module, including: a first capacitor (C1), a second capacitor (C2) and a fourteenth resistor (R14), in which a first end of the first capacitor (C1) is connected to the second end of the second resistor (R2) and a first end of the fourteenth resistor (R14), a second end of the first capacitor (C1) is grounded, a first end of the second capacitor (C2) is connected to the analog-digital conversion end (ADC) and a second end of the fourteenth resistor (R14), and a second end of the second capacitor (C2) is grounded.

As shown in Figure 2, the input-output control circuit above further includes: a first voltage stabilizer (D1), where a first end of the first voltage stabilizer (D1) is connected to the signal input-output end (in-out), and a second end of the first voltage stabilizer (D1) is grounded.

As shown in Figure 2, the input-output control circuit above further includes: a second voltage stabilizer (D2), where a first end of the second voltage stabilizer (D2) is connected to a second direct-current voltage source such as a 3.3 VDC voltage source, a second end of the second voltage stabilizer (D2) is connected to the analog-digital conversion end (ADC), and a third end of the second voltage stabilizer (D2) is grounded.

In specific, based on the input-output end in an input state, the signal input, for example, is a temperature signal, the input-output control circuit is in a resistance collecting mode, and an external resistance-type temperature sensor (RT) is connected to the input-output end. The control module (80) controls the second transistor (Q2) and the first transistor (Q1) to be connected according to a high-level signal output by the first control end (CI-1); the control module (80) individually controls the third transistor (Q3) and the fifth transistor (Q5) to be disconnected, as well as the fourth transistor (Q4) to be connected according to a low-level signal output by the second control end (CI-2); and the control module (80) controls the relay (IC1) to be disconnected according to a low-level signal output by the third control end (CI-3). At this time, the second resistor (R2) and the fourth resistor (R4) are connected in series, and the external resistance-type temperature sensor (RT) is connected in parallel to the series second resistor (R2) and fourth resistor (R4), and is further connected in series to the first resistor (R1). The resistance collecting circuit is supplied with electricity through the first direct-current voltage source, and a voltage signal across the fourth resistor (R4) is collected. The voltage signal is filtered by the filtration module and output to the analog-digital conversion end (ADC), so as to perform analog-digital conversion, by the control module (80), on the voltage signal. At this time, a value of resistance of the external resistance-type temperature sensor (RT) is obtained by the control module (80) based on the collected voltage signal, thereby realizing a collection for the input resistance value.

Based on the input-output end in an input state, the signal input, for example, is a current signal, the input-output control circuit is in a current collecting mode, and a current signal of 0-20 mA is(are) connected to the input-output end. The control module (80) controls the second transistor (Q2) and the first transistor (Q1) to be disconnected according to a low-level signal output by the first control end (CI-1); the control module (80) individually controls the third transistor (Q3) and the fifth transistor (Q5) to be connected, as well as the fourth transistor (Q4) to be disconnected according to a high-level signal output by the second control end (CI-2); and the control module (80) controls the relay (IC1) to be disconnected according to a low-level signal output by the third control end (CI-3). At this time, the current signal of 0-20 mA is(are) detected via the third resistor (R3) and is converted to a voltage signal, and the converted voltage signal, after across the second resistor (R2), is filtered by the filtration module and output to the analog-digital conversion end (ADC), and the voltage signal is performed with analog-digital conversion by the control module (80). At this time, a current value of the current signal is obtained by the control module (80), based on the collected voltage signal, thereby realizing a collection for the input current value.

Based on the input-output end in an input state, the signal input, for example, is a voltage signal, the input-output control circuit is in a voltage collecting mode, and a voltage signal of 0-10 V is(are) connected to the input-output end. The control module (80) controls the second transistor (Q2) and the first transistor (Q1) to be disconnected according to a low-level signal output by the first control end (CI-1); the control module (80) individually controls the third transistor (Q3) and the fifth transistor (Q5) to be disconnected, as well as the fourth transistor (Q4) to be connected according to a low-level signal output by the second control end (CI-2); and the control module (80) controls the relay (IC1) to be disconnected according to a low-level signal output by the third control end (CI-3). At this time, the voltage signal of 0-10 V is(are) divided by the second resistor (R2) and the fourth resistor (R4) and then filtered by the filtration module, and is output to the analog-digital conversion end (ADC), and the voltage signal is performed with analog-digital conversion by the control module (80). At this time, a voltage value of the voltage signal is obtained by the control module (80), based on the obtained voltage signal, thereby realizing a collection for the input voltage value.

Based on the input-output end in an output state, the signal output, for example, is a voltage signal, the input-output control circuit is in a voltage outputting mode, and the control module (80) inputs a voltage signal of 0-10 V to the digital-analog conversion end (DAC). The control module (80) controls the second transistor (Q2) and the first transistor (Q1) to be disconnected according to a low-level signal output by the first control end (CI-1); the control module (80) individually controls the third transistor (Q3) and the fifth transistor (Q5) to be disconnected, as well as the fourth transistor (Q4) to be connected according to a low-level signal output by the second control end (CI-2); and the control module (80) controls the relay (IC1) to be connected according to a high-level signal output by the third control end (CI-3). At this time, the voltage signal of 0-10 V is operationally amplified by the amplification module (70), and a voltage signal of 0-10 V is(are) output to the input-output end. That is, a voltage signal of 0-10 V is(are) output from the input-output end. At this time, the voltage signal of 0-10 V is(are) divided by the second resistor (R2) and the fourth resistor (R4), and the analog-digital conversion end (ADC) collects a voltage across the fourth resistor (R4), thereby realizing a collection for the input voltage.

Based on that a dry-contact (electrical independent contact) signal is input via the input-output end, the control module (80) controls the second transistor (Q2) and the first transistor (Q1) to be connected according to a high-level signal output by the first control end (CI-1); the control module (80) individually controls the third transistor (Q3) and the fifth transistor (Q5) to be disconnected, as well as the fourth transistor (Q4) to be connected according to a low-level signal output by the second control end (CI-2); and the control module (80) controls the relay (IC1) to be disconnected according to a low-level signal output by the third control end (CI-3). At this time, based on the input-output end is disconnected, a voltage collected by the analog-digital conversion end (ADC) is about 10 V; while based on the input-output end is connected, a voltage collected by the analog-digital conversion end (ADC) is about 0 V, such that the analog-digital conversion end (ADC) could judge whether the input-output end is on or off, according to the maximum value and the minimum value of the collected voltage value, thereby realizing the monitoring of digital quantity.

It should be noted that a current signal may be further output from the input-output end.

In summary, the input-output control circuit includes: the signal input-output end, the first switch module, the first resistor, the second switch module, the second resistor, the third resistor, the third switch module, the fourth resistor, the fourth switch module, the fifth switch module, the amplification module, the sixth switch module and the controller module, where the signal input-output end is for inputting or outputting a signal; the first end of the first switch module is connected to the first direct-current voltage source; the first end of the first resistor is connected to the second end of the first switch module; the first end of the second switch module is connected to the third end of the first switch module, the second end of the second switch module is grounded, and the third end of the second switch module is connected to the first control end of the control module; the first end of the second resistor is connected to the signal input-output end, and the second end of the second resistor is connected to the second direct-current voltage source and the analog-digital conversion end of the control module; the first end of the third resistor is connected to the signal input-output end; the first end of the third switch module is connected to the second end of the third resistor, the second end of the third switch module is grounded, and the third end of the third switch module is connected to the second control end of the control module; the first end of the fourth resistor is connected to the second end of the second resistor; the first end of the fourth switch module is connected to the second end of the fourth resistor, and the second end of the fourth switch module is grounded; the first end of the fifth switch module is connected to the third end of the fourth switch module and the third direct-current voltage source, the second end of the fifth switch module is grounded, and the third end of the fifth switch module is connected to the second control end of the control module; the first end of the amplification module is connected to the digital-analog conversion end of the control module, and the second end of the amplification module is grounded; the first end of the sixth switch module is connected to the third end of the amplification module, the second end of the sixth switch module is connected to the signal input-output end, the third end of the sixth switch module is connected to the third control end of the control module, and the fourth end of the sixth switch module is grounded; and the control module is configured to: control the second switch module to be on or off according to the first control signal output by the first control end; control the fifth switch module and the third switch module to be on or off individually according to the second control signal output by the second control end; and control the sixth switch module to be on or off according to the third control signal output by the third control end, to collect the signal input from the signal input-output end by the analog-digital conversion end, or to output the signal input to the digital-analog conversion end through the signal input-output end. Accordingly, the input-output control circuit could convert the input or output signal with simple operations, thereby improving the universality, safety and reliability of the input-output control circuit.

For achieving the above embodiments, embodiments of the present disclosure further provide a controller.

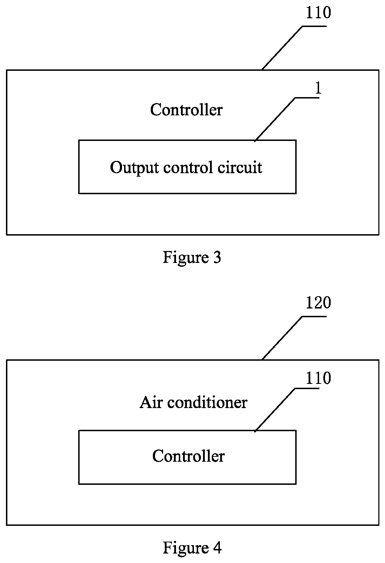

As shown in Figure 3, the controller (110) provided in embodiments of the present disclosure may specifically include: an input-output control circuit according to any one of the above embodiments of the present disclosure.

The controller according to embodiments of the present disclosure could convert the input or output signal, thereby improving the universality, safety and reliability of the input and output control circuit.

For achieving the above embodiments, embodiments of the present disclosure further provide an air conditioner 120.

As shown in Figure 4, the air conditioner 120 provided in embodiments of the present disclosure may specifically include: a controller (110) as shown in Figure 3.

The air conditioner according to embodiments of the present disclosure could convert the input or output signal thereby improving the universality, safety and reliability of the input and output control circuit.

## Claims

1. An input-output control circuit for a controller, wherein the input-output control circuit is configured to be arranged in a controller (110), and the input-output control circuit comprises:
a signal input-output end (in-out) for inputting or outputting a signal;
a first switch module (10), wherein a first end of the first switch module (10) is connectable to a first direct-current voltage source;
a first resistor (R1), wherein a first end of the first resistor (R1) is connected to a second end of the first switch module (10);
a second switch module (20), wherein a first end of the second switch module (20) is connected to a third end of the first switch module (10), a second end of the second switch module (20) is grounded, and a third end of the second switch module (20) is connected to a first control end (CI-1) of a control module (80);
a second resistor (R2), wherein a first end of the second resistor (R2) is connected to the signal input-output end (in-out), and a second end of the second resistor (R2) is connectable to a second direct-current voltage source and an analog-digital conversion, ADC, end of the control module (80);
a third resistor (R3), wherein a first end of the third resistor (R3) is connected to the signal input-output end (in-out);
a third switch module (30), wherein a first end of the third switch module (30) is connected to a second end of the third resistor (R3), a second end of the third switch module (30) is grounded, and a third end of the third switch module (30) is connected to a second control end (CI-2) of the control module (80);
a fourth resistor (R24), wherein a first end of the fourth resistor (R4) is connected to the second end of the second resistor (R2);
a fourth switch module (40), wherein a first end of the fourth switch module (40) is connected to a second end of the fourth resistor (R4), and a second end of the fourth switch module (40) is grounded;
a fifth switch module (50), wherein a first end of the fifth switch module (50) is connected to a third end of the fourth switch module (40) and is connectable to
a third direct-current voltage source, a second end of the fifth switch module (50) is grounded, and a third end of the fifth switch module (50) is connected to the second control end (CI-2) of the control module (80);
an amplification module (70), wherein a first end of the amplification module (70) is connected to a digital-analog conversion, DAC, end of the control module (80), and a second end of the amplification module (70) is grounded;
a sixth switch module (60), wherein a first end of the sixth switch module (60) is connected to a third end of the amplification module (70), a second end of the sixth switch module (60) is connected to the signal input-output end (in-out), a third end of the sixth switch module (60) is connected to a third control end of the control module (80), and a fourth end of the sixth switch module (60) is grounded; and
the control module (80), wherein the control module is configured to: control the second switch module (20) to be on or off according to a first control signal output by the first control end (CI-1); control the fifth switch module (50) and the third switch module (30) to be on or off individually according to a second control signal output by the second control end (CI-2); and control the sixth switch module (60) to be on or off according to a third control signal output by the third control end, to collect the signal input from the signal input-output end (in-out) by the analog-digital conversion, ADC, end, or to output the signal input to the digital-analog conversion, DAC, end through the signal input-output end (in-out).

2. The input-output control circuit according to claim 1, wherein the first switch module (10) comprises:
a first transistor (Q1), wherein a first end of the first transistor (Q1) is connectable to the first direct-current voltage source, a second end of the first transistor (Q1) is connected to the first end of the first resistor (R1), and a third end of the first transistor (Q1) is connected to the first end of the second switch module (20); and
a fifth resistor (R5), wherein a first end of the fifth resistor (R5) is connected to the first end of the first transistor (Q1), and a second end of the fifth resistor (R5) is connected to the third end of the first transistor (Q1).

3. The input-output control circuit according to claim 1 or 2, wherein the second switch module (20) comprises:
a second transistor (Q2), wherein a first end of the second transistor (Q2) is connected to the third end of the first switch module (10), a second end of the second transistor (Q2) is grounded, and a third end of the second transistor (Q2) is connected to the first control end (CI-1).

4. The input-output control circuit according to any one of claims 1 to 3, wherein the third switch module (30) comprises:
a third transistor (Q3), wherein a first end of the third transistor (Q3) is connected to the second end of the third resistor (R3), a second end of the third transistor (Q3) is grounded, and a third end of the third transistor (Q3) is connected to the second control end (CI-2); and
a sixth resistor (R6), wherein a first end of the sixth resistor (R6) is connected to the third end of the third transistor (Q3), and a second end of the sixth resistor (R6) is connected to the second end of the third transistor (Q3).

5. The input-output control circuit according to any one of claims 1 to 4, wherein the fourth switch module (40) comprises:
a fourth transistor (Q4), wherein a first end of the fourth transistor (Q4) is connected to the second end of the fourth resistor (R4), a second end of the fourth transistor (Q4) is grounded, and a third end of the fourth transistor (Q4) is connected to the first end of the fifth switch module (50); and
a seventh resistor (R7), wherein a first end of the seventh resistor (R7) is connected to the second end of the fourth transistor (Q4), and a second end of the seventh resistor (R7) is connected to the third end of the fourth transistor (Q4).

6. The input-output control circuit according to any one of claims 1 to 5, wherein the fifth switch module (50) comprises:
a fifth transistor (Q5), wherein a first end of the fifth transistor (Q5) is connectable to the third direct-current voltage source via an eighth resistor, a second end of the fifth transistor (Q5) is grounded, and a third end of the fifth transistor (Q5) is connected to the second control end (CI-2).

7. The input-output control circuit according to any one of claims 1 to 6, wherein the amplification module (70) comprises:
an operational amplifier;
a ninth resistor, wherein a first end of the ninth resistor is connected to a non-inverting input end of the operational amplifier, and a second end of the ninth resistor is connected to the digital-analog conversion, DAC, end;
a tenth resistor, wherein a first end of the tenth resistor is connected to an inverting input end of the operational amplifier, and a second end of the tenth resistor is grounded;
an eleventh resistor, wherein a first end of the eleventh resistor is connected to the first end of the sixth switch module (60), and a second end of the eleventh resistor is connected to an output end of the operational amplifier; and
a twelfth resistor, wherein a first end of the twelfth resistor is connected to the first end of the eleventh resistor, and a second end of the twelfth resistor is connected to the inverting input end of the operational amplifier.

8. The input-output control circuit according to any one of claims 1 to 7, wherein the sixth switch module (60) comprises:
a relay, wherein a first end of the relay is connected to the third end of the amplification module (70), a second end of the relay is connected to the signal input-output end (in-out), a third end of the relay is connected to the third control end via a thirteenth resistor (R13), and a fourth end of the relay is grounded.

9. The input-output control circuit according to any one of claims 1 to 8, further comprising:
a filtration module, comprising: a first capacitor (C1), a second capacitor (C2) and a fourteenth resistor (R14), wherein
a first end of the first capacitor (C1) is connected to the second end of the second resistor (R2) and a first end of the fourteenth resistor (R14), a second end of the first capacitor (C1) is grounded,
a first end of the second capacitor (C2) is connected to the analog-digital conversion, ADC, end and a second end of the fourteenth resistor (R14), and a second end of the second capacitor (C2) is grounded.

10. The input-output control circuit according to any one of claims 1 to 9, further comprising:
a first voltage stabilizer (D1), wherein a first end of the first voltage stabilizer (D1) is connected to the signal input-output end (in-out), and a second end of the first voltage stabilizer (D1) is grounded.

11. The input-output control circuit according to any one of claims 1 to 10, further comprising:
a second voltage stabilizer (D2), wherein a first end of the second voltage stabilizer (D2) is connectable to the second direct-current voltage source, a second end of the second voltage stabilizer (D2) is connected to the analog-digital conversion, ADC, end, and a third end of the second voltage stabilizer is grounded.

12. A controller (110), comprising an input-output control circuit for a controller according to any one of claims 1 to 11.

13. An air conditioner (120), comprising a controller (110) according to claim 12.

## Patentansprüche

1. Ein-/Ausgangssteuerschaltung für eine Steuerung, wobei die Ein-/Ausgangssteuerschaltung dazu konfiguriert ist, in einer Steuerung (110) angeordnet zu sein, und die Ein-/Ausgangssteuerschaltung Folgendes umfasst:
ein Signalein-/-ausgangsende (in-out) zum Eingeben oder Ausgeben eines Signals;
ein erstes Schaltmodul (10), wobei ein erstes Ende des ersten Schaltmoduls (10) mit einer ersten Gleichspannungsquelle verbindbar ist;
einen ersten Widerstand (R1), wobei ein erstes Ende des ersten Widerstands (R1) mit einem zweiten Ende des ersten Schaltmoduls (10) verbunden ist;
ein zweites Schaltmodul (20), wobei ein erstes Ende des zweiten Schaltmoduls (20) mit einem dritten Ende des ersten Schaltmoduls (10) verbunden ist, ein zweites Ende des zweiten Schaltmoduls (20) mit Masse verbunden ist und ein drittes Ende des zweiten Schaltmoduls (20) mit einem ersten Steuerende (CI-1) eines Steuermoduls (80) verbunden ist;
einen zweiten Widerstand (R2), wobei ein erstes Ende des zweiten Widerstands (R2) mit dem Signalein-/-ausgangsende (in-out) verbunden ist und ein zweites Ende des zweiten Widerstands (R2) mit einer zweiten Gleichspannungsquelle und einem Analog-Digital-Umsetzungsende, ADU-Ende, des Steuermoduls (80) verbindbar ist;
einen dritten Widerstand (R3), wobei ein erstes Ende des dritten Widerstands (R3) mit dem Signalein-/-ausgangsende (in-out) verbunden ist;
ein drittes Schaltmodul (30), wobei ein erstes Ende des dritten Schaltmoduls (30) mit einem zweiten Ende des dritten Widerstands (R3) verbunden ist, ein zweites Ende des dritten Schaltmoduls (30) mit Masse verbunden ist und ein drittes Ende des dritten Schaltmoduls (30) mit einem zweiten Steuerende (CI-2) des Steuermoduls (80) verbunden ist;
einen vierten Widerstand (R24), wobei ein erstes Ende des vierten Widerstands (R4) mit dem zweiten Ende des zweiten Widerstands (R2) verbunden ist;
ein viertes Schaltmodul (40), wobei ein erstes Ende des vierten Schaltmoduls (40) mit einem zweiten Ende des vierten Widerstands (R4) verbunden ist und ein zweites Ende des vierten Schaltmoduls (40) mit Masse verbunden ist;
ein fünftes Schaltmodul (50), wobei ein erstes Ende des fünften Schaltmoduls (50) mit einem dritten Ende des vierten Schaltmoduls (40) verbunden ist und mit einer dritten Gleichspannungsquelle verbindbar ist, ein zweites Ende des fünften Schaltmoduls (50) mit Masse verbunden ist und ein drittes Ende des fünften Schaltmoduls (50) mit dem zweiten Steuerende (CI-2) des Steuermoduls (80) verbunden ist;
ein Verstärkungsmodul (70), wobei ein erstes Ende des Verstärkungsmoduls (70) mit einem Digital-Analog-Umsetzungsende, DAU-Ende, des Steuermoduls (80) verbunden ist und ein zweites Ende des Verstärkungsmoduls (70) mit Masse verbunden ist;
ein sechstes Schaltmodul (60), wobei ein erstes Ende des sechsten Schaltmoduls (60) mit einem dritten Ende des Verstärkungsmoduls (70) verbunden ist, ein zweites Ende des sechsten Schaltmoduls (60) mit dem Signalein-/-ausgangsende (in-out) verbunden ist, ein drittes Ende des sechsten Schaltmoduls (60) mit einem dritten Steuerende des Steuermoduls (80) verbunden ist und ein viertes Ende des sechsten Schaltmoduls (60) mit Masse verbunden ist; und
das Steuermodul (80), wobei das Steuermodul zu Folgendem konfiguriert ist: Steuern des zweiten Schaltmoduls (20), sodass es gemäß einem durch das erste Steuerende (CI-1) ausgegebenen ersten Steuersignal an oder aus ist; Steuern des fünften Schaltmoduls (50) und des dritten Schaltmoduls (30), sodass sie gemäß einem durch das zweite Steuerende (CI-2) ausgegebenen zweiten Steuersignal einzeln an oder aus sind; und Steuern des sechsten Schaltmoduls (60), sodass es gemäß einem durch das dritte Steuerende ausgegebenen dritten Steuersignal an oder aus ist, um das von dem Signalein-/-ausgangsende (in-out) eingegebene Signal durch das Analog-Digital-Umsetzungsende, ADU-Ende, zu erfassen oder das in das Digital-Analog-Umsetzungsende, DAU-Ende, eingegebene Signal durch das Signalein-/- ausgangsende (in-out) auszugeben.

2. Ein-/Ausgangssteuerschaltung nach Anspruch 1, wobei das erste Schaltmodul (10) Folgendes umfasst:
einen ersten Transistor (Q1), wobei ein erstes Ende des ersten Transistors (Q1) mit der ersten Gleichspannungsquelle verbindbar ist, ein zweites Ende des ersten Transistors (Q1) mit dem ersten Ende des ersten Widerstands (R1) verbunden ist und ein drittes Ende des ersten Transistors (Q1) mit dem ersten Ende des zweiten Schaltmoduls (20) verbunden ist; und
einen fünften Widerstand (R5), wobei ein erstes Ende des fünften Widerstands (R5) mit dem ersten Ende des ersten Transistors (Q1) verbunden ist und ein zweites Ende des fünften Widerstands (R5) mit dem dritten Ende des ersten Transistors (Q1) verbunden ist.

3. Ein-/Ausgangssteuerschaltung nach Anspruch 1 oder 2, wobei das zweite Schaltmodul (20) Folgendes umfasst:
einen zweiten Transistor (Q2), wobei ein erstes Ende des zweiten Transistors (Q2) mit dem dritten Ende des ersten Schaltmoduls (10) verbunden ist, ein zweites Ende des zweiten Transistors (Q2) mit Masse verbunden ist und ein drittes Ende des zweiten Transistors (Q2) mit dem ersten Steuerende (CI-1) verbunden ist.

4. Ein-/Ausgangssteuerschaltung nach einem der Ansprüche 1 bis 3, wobei das dritte Schaltmodul (30) Folgendes umfasst:
einen dritten Transistor (Q3), wobei ein erstes Ende des dritten Transistors (Q3) mit dem zweiten Ende des dritten Widerstands (R3) verbunden ist, ein zweites Ende des dritten Transistors (Q3) mit Masse verbunden ist und ein drittes Ende des dritten Transistors (Q3) mit dem zweiten Steuerende (CI-2) verbunden ist; und
einen sechsten Widerstand (R6), wobei ein erstes Ende des sechsten Widerstands (R6) mit dem dritten Ende des dritten Transistors (Q3) verbunden ist und ein zweites Ende des sechsten Widerstands (R6) mit dem zweiten Ende des dritten Transistors (Q3) verbunden ist.

5. Ein-/Ausgangssteuerschaltung nach einem der Ansprüche 1 bis 4, wobei das vierte Schaltmodul (40) Folgendes umfasst:
einen vierten Transistor (Q4), wobei ein erstes Ende des vierten Transistors (Q4) mit dem zweiten Ende des vierten Widerstands (R4) verbunden ist, ein zweites Ende des vierten Transistors (Q4) mit Masse verbunden ist und ein drittes Ende des vierten Transistors (Q4) mit dem ersten Ende des fünften Schaltmoduls (50) verbunden ist; und
einen siebten Widerstand (R7), wobei ein erstes Ende des siebten Widerstands (R7) mit dem zweiten Ende des vierten Transistors (Q4) verbunden ist und ein zweites Ende des siebten Widerstands (R7) mit dem dritten Ende des vierten Transistors (Q4) verbunden ist.

6. Ein-/Ausgangssteuerschaltung nach einem der Ansprüche 1 bis 5, wobei das fünfte Schaltmodul (50) Folgendes umfasst:
einen fünften Transistor (Q5), wobei ein erstes Ende des fünften Transistors (Q5) über einen achten Widerstand mit der dritten Gleichspannungsquelle verbindbar ist, ein zweites Ende des fünften Transistors (Q5) mit Masse verbunden ist und ein drittes Ende des fünften Transistors (Q5) mit dem zweiten Steuerende (CI-2) verbunden ist.

7. Ein-/Ausgangssteuerschaltung nach einem der Ansprüche 1 bis 6, wobei das Verstärkungsmodul (70) Folgendes umfasst:
einen Operationsverstärker;
einen neunten Widerstand, wobei ein erstes Ende des neunten Widerstands mit einem nichtinvertierenden Eingangsende des Operationsverstärkers verbunden ist und ein zweites Ende des neunten Widerstands mit dem Digital-Analog-Umsetzungsende, DAU-Ende, verbunden ist;
einen zehnten Widerstand, wobei ein erstes Ende des zehnten Widerstands mit einem invertierenden Eingangsende des Operationsverstärkers verbunden ist und ein zweites Ende des zehnten Widerstands mit Masse verbunden ist;
einen elften Widerstand, wobei ein erstes Ende des elften Widerstands mit dem ersten Ende des sechsten Schaltmoduls (60) verbunden ist und ein zweites Ende des elften Widerstands mit einem Ausgangsende des Operationsverstärkers verbunden ist; und
einen zwölften Widerstand, wobei ein erstes Ende des zwölften Widerstands mit dem ersten Ende des elften Widerstands verbunden ist und ein zweites Ende des zwölften Widerstands mit dem invertierenden Eingangsende des Operationsverstärkers verbunden ist.

8. Ein-/Ausgangssteuerschaltung nach einem der Ansprüche 1 bis 7, wobei das sechste Schaltmodul (60) Folgendes umfasst:
ein Relais, wobei ein erstes Ende des Relais mit dem dritten Ende des Verstärkungsmoduls (70) verbunden ist, ein zweites Ende des Relais mit dem Signalein-/- ausgangsende (in-out) verbunden ist, ein drittes Ende des Relais über einen dreizehnten Widerstand (R13) mit dem dritten Steuerende verbunden ist und ein viertes Ende des Relais mit Masse verbunden ist.

9. Ein-/Ausgangssteuerschaltung nach einem der Ansprüche 1 bis 8, die ferner Folgendes umfasst:
ein Filtermodul, das Folgendes umfasst: einen ersten Kondensator (C1), einen zweiten Kondensator (C2) und einen vierzehnten Widerstand (R14), wobei
ein erstes Ende des ersten Kondensators (C1) mit dem zweiten Ende des zweiten Widerstands (R2) und einem ersten Ende des vierzehnten Widerstands (R14) verbunden ist, ein zweites Ende des ersten Kondensators (C1) mit Masse verbunden ist,
ein erstes Ende des zweiten Kondensators (C2) mit dem Analog-Digital-Umsetzungsende, ADU-Ende, und einem zweiten Ende des vierzehnten Widerstands (R14) verbunden ist und ein zweites Ende des zweiten Kondensators (C2) mit Masse verbunden ist.

10. Ein-/Ausgangssteuerschaltung nach einem der Ansprüche 1 bis 9, die ferner Folgendes umfasst:
einen ersten Spannungsstabilisator (D1), wobei ein erstes Ende des ersten Spannungsstabilisators (D1) mit dem Signalein-/-ausgangsende (in-out) verbunden ist und ein zweites Ende des ersten Spannungsstabilisators (D1) mit Masse verbunden ist.

11. Ein-/Ausgangssteuerschaltung nach einem der Ansprüche 1 bis 10, die ferner Folgendes umfasst:
einen zweiten Spannungsstabilisator (D2), wobei ein erstes Ende des zweiten Spannungsstabilisators (D2) mit der zweiten Gleichspannungsquelle verbindbar ist, ein zweites Ende des zweiten Spannungsstabilisators (D2) mit dem Analog-Digital-Umsetzungsende, ADU-Ende, verbunden ist und ein drittes Ende des zweiten Spannungsstabilisators mit Masse verbunden ist.

12. Steuerung (110), die eine Ein-/Ausgangssteuerschaltung für eine Steuerung nach einem der Ansprüche 1 bis 11 umfasst.

13. Klimaanlage (120), die eine Steuerung (110) nach Anspruch 12 umfasst.

## Revendications

1. Circuit de commande d'entrée-sortie pour un dispositif de commande, dans lequel le circuit de commande d'entrée-sortie est configuré pour être disposé dans un dispositif de commande (110), et le circuit de commande d'entrée-sortie comprend :
une extrémité d'entrée-sortie de signal (in-out) pour une entrée ou une sortie d'un signal ;
un premier module de commutation (10), dans lequel une première extrémité du premier module de commutation (10) peut être connectée à une première source de tension continue ;
une première résistance (R1), dans lequel une première extrémité de la première résistance (R1) est connectée à une deuxième extrémité du premier module de commutation (10) ;
un deuxième module de commutation (20), dans lequel une première extrémité du deuxième module de commutation (20) est connectée à une troisième extrémité du premier module de commutation (10), une deuxième extrémité du deuxième module de commutation (20) est mise à la masse, et une troisième extrémité du deuxième module de commutation (20) est connectée à une première extrémité de commande (CI-1) d'un module de commande (80) ;
une deuxième résistance (R2), dans lequel une première extrémité de la deuxième résistance (R2) est connectée à l'extrémité d'entrée-sortie de signal (in-out), et une deuxième extrémité de la deuxième résistance (R2) peut être connectée à une deuxième source de tension continue et à une extrémité de conversion analogique-numérique, ADC, du module de commande (80) ;
une troisième résistance (R3), dans lequel une première extrémité de la troisième résistance (R3) est connectée à l'extrémité d'entrée-sortie de signal (in-out) ;
un troisième module de commutation (30), dans lequel une première extrémité du troisième module de commutation (30) est connectée à une deuxième extrémité de la troisième résistance (R3), une deuxième extrémité du troisième module de commutation (30) est mise à la masse, et une troisième extrémité du troisième module de commutation (30) est connectée à une deuxième extrémité de commande (CI-2) du module de commande (80) ;
une quatrième résistance (R24), dans lequel une première extrémité de la quatrième résistance (R4) est connectée à la deuxième extrémité de la deuxième résistance (R2) ;
un quatrième module de commutation (40), dans lequel une première extrémité du quatrième module de commutation (40) est connectée à une deuxième extrémité de la quatrième résistance (R4), et une deuxième extrémité du quatrième module de commutation (40) est mise à la masse ;
un cinquième module de commutation (50), dans lequel une première extrémité du cinquième module de commutation (50) est connectée à une troisième extrémité du quatrième module de commutation (40) et peut être connectée à une troisième source de tension continue, une deuxième extrémité du cinquième module de commutation (50) est mise à la masse, et une troisième extrémité du cinquième module de commutation (50) est connectée à la deuxième extrémité de commande (CI-2) du module de commande (80) ;
un module d'amplification (70), dans lequel une première extrémité du module d'amplification (70) est connectée à une extrémité de conversion numérique-analogique, DAC, du module de commande (80), et une deuxième extrémité du module d'amplification (70) est mise à la masse ;
un sixième module de commutation (60), dans lequel une première extrémité du sixième module de commutation (60) est connectée à une troisième extrémité du module d'amplification (70), une deuxième extrémité du sixième module de commutation (60) est connectée à l'extrémité d'entrée-sortie de signal (in-out), une troisième extrémité du sixième module de commutation (60) est connectée à une troisième extrémité de commande du module de commande (80), et une quatrième extrémité du sixième module de commutation (60) est mise à la masse ; et
le module de commande (80), dans lequel le module de commande est configuré pour : commander l'activation ou la désactivation du deuxième module de commutation (20) selon un premier signal de commande émis par la première extrémité de commande (CI-1) ; commander l'activation ou la désactivation individuellement du cinquième module de commutation (50) et du troisième module de commutation (30) selon un second signal de commande émis par la deuxième extrémité de commande (CI-2) ; et commander l'activation ou la désactivation du sixième module de commutation (60) selon un troisième signal de commande émis par la troisième extrémité de commande, afin de collecter le signal entré à partir de l'extrémité d'entrée-sortie de signal (in-out) par l'extrémité de conversion analogique-numérique, ADC, ou de sortir le signal entré vers l'extrémité de conversion numérique-analogique, DAC, via l'extrémité d'entrée-sortie de signal (in-out).

2. Circuit de commande d'entrée-sortie selon la revendication 1, dans lequel le premier module de commutation (10) comprend :
un premier transistor (Q1), dans lequel une première extrémité du premier transistor (Q1) peut être connectée à la première source de tension continue, une deuxième extrémité du premier transistor (Q1) est connectée à la première extrémité de la première résistance (R1), et une troisième extrémité du premier transistor (Q1) est connectée à la première extrémité du deuxième module de commutation (20) ; et
une cinquième résistance (R5), dans lequel une première extrémité de la cinquième résistance (R5) est connectée à la première extrémité du premier transistor (Q1), et une deuxième extrémité de la cinquième résistance (R5) est connectée à la troisième extrémité du premier transistor (Q1).

3. Circuit de commande d'entrée-sortie selon la revendication 1 ou 2, dans lequel le deuxième module de commutation (20) comprend :
un second transistor (Q2), dans lequel une première extrémité du second transistor (Q2) est connectée à la troisième extrémité du premier module de commutation (10), une deuxième extrémité du second transistor (Q2) est mise à la masse, et une troisième extrémité du second transistor (Q2) est connectée à la première extrémité de commande (CI-1).

4. Circuit de commande d'entrée-sortie selon l'une quelconque des revendications 1 à 3, dans lequel le troisième module de commutation (30) comprend :
un troisième transistor (Q3), dans lequel une première extrémité du troisième transistor (Q3) est connectée à la deuxième extrémité de la troisième résistance (R3), une deuxième extrémité du troisième transistor (Q3) est mise à la masse, et une troisième extrémité du troisième transistor (Q3) est connectée à la deuxième extrémité de commande (CI-2) ; et
une sixième résistance (R6), dans lequel une première extrémité de la sixième résistance (R6) est connectée à la troisième extrémité du troisième transistor (Q3), et une deuxième extrémité de la sixième résistance (R6) est connectée à la deuxième extrémité du troisième transistor (Q3).

5. Circuit de commande d'entrée-sortie selon l'une quelconque des revendications 1 à 4, dans lequel le quatrième module de commutation (40) comprend :
un quatrième transistor (Q4), dans lequel une première extrémité du quatrième transistor (Q4) est connectée à la deuxième extrémité de la quatrième résistance (R4), une deuxième extrémité du quatrième transistor (Q4) est mise à la masse, et une troisième extrémité du quatrième transistor (Q4) est connectée à la première extrémité du cinquième module de commutation (50) ; et
une septième résistance (R7), dans lequel une première extrémité de la septième résistance (R7) est connectée à la deuxième extrémité du quatrième transistor (Q4), et une deuxième extrémité de la septième résistance (R7) est connectée à la troisième extrémité du quatrième transistor (Q4).

6. Circuit de commande d'entrée-sortie selon l'une quelconque des revendications 1 à 5, dans lequel le cinquième module de commutation (50) comprend :
un cinquième transistor (Q5), dans lequel une première extrémité du cinquième transistor (Q5) peut être connectée à la troisième source de tension continue via une huitième résistance, une deuxième extrémité du cinquième transistor (Q5) est mise à la masse, et une troisième extrémité du cinquième transistor (Q5) est connectée à la deuxième extrémité de commande (CI-2).

7. Circuit de commande d'entrée-sortie selon l'une quelconque des revendications 1 à 6, dans lequel le module d'amplification (70) comprend :
un amplificateur opérationnel ;
une neuvième résistance, dans lequel une première extrémité de la neuvième résistance est connectée à une extrémité d'entrée non-inverseuse de l'amplificateur opérationnel, et une deuxième extrémité de la neuvième résistance est connectée à l'extrémité de conversion numérique-analogique, DAC ;
une dixième résistance, dans lequel une première extrémité de la dixième résistance est connectée à une extrémité d'entrée inverseuse de l'amplificateur opérationnel, et une deuxième extrémité de la dixième résistance est mise à la masse ;
une onzième résistance, dans lequel une première extrémité de l'onzième résistance est connectée à la première extrémité du sixième module de commutation (60), et une deuxième extrémité de l'onzième résistance est connectée à une extrémité de sortie de l'amplificateur opérationnel ; et
une douzième résistance, dans lequel une première extrémité de la douzième résistance est connectée à la première extrémité de l'onzième résistance, et une deuxième extrémité de la douzième résistance est connectée à l'extrémité d'entrée inverseuse de l'amplificateur opérationnel.

8. Circuit de commande d'entrée-sortie selon l'une quelconque des revendications 1 à 7, dans lequel le sixième module de commutation (60) comprend :
un relais, dans lequel une première extrémité du relais est connectée à la troisième extrémité du module d'amplification (70), une deuxième extrémité du relais est connectée à l'extrémité d'entrée-sortie de signal (in-out), une troisième extrémité du relais est connectée à la troisième extrémité de commande via une treizième résistance (R13), et une quatrième extrémité du relais est mise à la masse.

9. Circuit de commande d'entrée-sortie selon l'une quelconque des revendications 1 à 8, comprenant en outre :
un module de filtrage, comprenant : un premier condensateur (C1), un second condensateur (C2) et une quatorzième résistance (R14), dans lequel
une première extrémité du premier condensateur (C1) est connectée à la deuxième extrémité de la deuxième résistance (R2) et à une première extrémité de la quatorzième résistance (R14), une deuxième extrémité du premier condensateur (C1) est mise à la masse,
une première extrémité du second condensateur (C2) est connectée à l'extrémité de conversion analogique-numérique, ADC, et à une deuxième extrémité de la quatorzième résistance (R14), et une deuxième extrémité du second condensateur (C2) est mise à la masse.

10. Circuit de commande d'entrée-sortie selon l'une quelconque des revendications 1 à 9, comprenant en outre :
un premier stabilisateur de tension (D1), dans lequel une première extrémité du premier stabilisateur de tension (D1) est connectée à l'extrémité d'entrée-sortie de signal (in-out), et une deuxième extrémité du premier stabilisateur de tension (D1) est mise à la masse.

11. Circuit de commande d'entrée-sortie selon l'une quelconque des revendications 1 à 10, comprenant en outre :
un second stabilisateur de tension (D2), dans lequel une première extrémité du second stabilisateur de tension (D2) peut être connectée à la deuxième source de tension continue, une deuxième extrémité du second stabilisateur de tension (D2) est connectée à l'extrémité de conversion analogique-numérique, ADC, et une troisième extrémité du second stabilisateur de tension est mise à la masse.

12. Dispositif de commande (110), comprenant un circuit de commande d'entrée-sortie pour un dispositif de commande selon l'une quelconque des revendications 1 à 11.

13. Climatiseur (120), comprenant un dispositif de commande (110) selon la revendication 12.
